## Europäisches Patentamt

## European Patent Office

## Office européen des brevets

(11) Veröffentlichungsnummer: **0 044 385**

**A1**

(12) **EUROPÄISCHE PATENTANMELDUNG**

(21) Anmeldenummer: 81103825.6

(22) Anmeldetag: 19.05.81

(51) Int. Cl.³: **H 04 N 5/44**
**H 04 N 5/50**

(30) Priorität: 23.07.80 DE 3027857

(43) Veröffentlichungstag der Anmeldung:
27.01.82 Patentblatt 82/4

(84) Benannte Vertragsstaaten:
CH FR IT LI NL

(71) Anmelder: SABA GmbH
Postfach 2060 Hermann-Schwer-Strasse 3
D-7730 Villingen-Schwenningen(DE)

(72) Erfinder: Arendt, Bodo
Alban-Dold-Strasse 30
D-7730 Villingen-Schwenningen(DE)

(72) Erfinder: Späth, Walter, Dipl.-Ing.
Trudpert-Neugart-Strasse 3
D-7730 Villingen-Schwenningen(DE)

(54) Schaltung zum Einblenden von Analogsignalen und alphanumerischen Zeichen auf dem Bildschirm eines Fernsehempfängers.

(57) Zum Einblenden von Analogsignalen und alphanumerischen Zeichen auf dem Bildschirm eines Fernsehemfängers mit Hilfe einer Einblendschaltung, besteht diese aus einem Taktgenerator (2), je einem Zähler (3,5) oder einer monostabilen Kippstufe und diesen zugeordneten Dekodern (4,7) zur Bestimmung des Einblendortes in horizontaler und vertikaler Richtung, wobei die Dekoder (4,7) Adressen eines Speichers (ROM) (10) ansteuern, in welchem die verschiedenen einzublendenden analogen und alphanumerischen Zeichen gespeichert sind. Damit die Einblendschaltung durch Mehrfachausnutzung mehrere Analogspannungen gleichzeitig wiedergibt und die Ausblendung von Informationsteilen vorhergehender Einblendungen bewirkt, ist ein zusätzlicher Vertikalzähler (11) vorgesehen, der nach einer voreinstellbaren Anzahl von Eingangsimpulsen einen Impuls auf eine von den Vertikalsynchronimpulsen rücksetzbare bistabile Kippstufe (12) abgibt. Der eine Ausgang der bistabilen Kippstufe (12) schaltet über einen elektronischen Schalter (13) die zweite einzublendende analoge Anzeige (U$_B$) ein, wogegen der andere Ausgang der bistabilen Kippstufe (12) gleichzeitig die während der Zeitdauer dieser zusätzlichen Einblendung aus dem Speicher (10) kommende alphanumerische Information sperrt.

./...

FIG.3

Stand der Technik:
------------------

Die Erfindung betrifft eine elektronische Schaltungsanordnung, mit der es möglich ist, auf einem Bildschirm eines
Fernsehempfängers analoge bzw. digitale Signale einzublenden.
Dieses ist insbesondere bei fernbedienten Fernsehempfängern
vorteilhaft, um eine Rückmeldung darüber zu bekommen, welcher Kanal gerade empfangen wird bzw. auf welche Werte gerade die analogen Funktionen wie z.B. für Lautstärke, Helligkeit und Farbsättigung oder für die Abstimmspannung eingestellt sind, da man diese Einstellung wegen der Fernbedienung und nicht sichtbarer Bedienungselemente direkt ablesen kann. Hierzu wurden elektronische Schaltungen in diskreter Bauart und auch schon in integrierter Schaltungstechnik eingesetzt, mit deren Hilfe die Rückmeldung über
eingeblendete digitale und balkenförmige Symbole auf dem
Bildschirm sichtbar gemacht wird.So wird in der DE-OS
24 32 600 eine Anordnung zur Anzeige verschiedener linearer
oder digitaler Signalgrößen auf dem Bildschirm eines Farbfernsehempfängers beschrieben, die dadurch gekennzeichnet
ist, daß der aus dem Bedienungsvorgang resultierende digitale oder analoge Stellwert auf dem Bildschirm einen festgelegten Teil der Bildfläche leuchtdichtmäßig in variabler
Größe so ausfüllt, daß die in vertikaler oder horizontaler
Richtung aussteuerbare Flächengröße als ein Maß für den gewählten Einstellwert angesehen werden kann.

Bei der in der genannten DE-OS beschriebenen Anordnung ist
es auch möglich, gleichzeitig mehrere Analogsignale übereinender auf dem Bildschirm zur Anzeige zu bringen.

Auch ist ein Verfahren für die proportionale Anzeige der
Balken auf den Bildschirm eines Fernsehempfängers in horizontaler Richtung bekannt, das dadurch gekennzeichnet ist,
daß im Abstand von diesem Bildschirmrand eine linke Kante
des Balkenfeldes im Abstand von dem linken Bildschirmrand
als Bezugskante für den Wert Null des einzustellenden Wertes und eine rechte Kante des Balkenfeldes im Abstand von
dem rechten Bildschirmrand als Bezugskante für den Höchstwert des einzustellenden Wertes sichtbar gemacht wird, wobei gleichzeitig mit dem Anzeigebalken ein mit den Anfang
und mit dem Ende mit dem Null- und Höchstwert des einzustellenden Wertes übereinstimmender Bezugsbalken als Unterfeld-, Nebenfeld- oder Schiebefeldbalken sichtbar gemacht
wird. (DE-AS 27 07 579). Hierbei sollte die Aufgabe gelöst
werden, eine eindeutige Anzeige über den Einstellwert dadurch zu erhalten, daß durch Einführung der Begrenzung der
Balken am linken und rechten Bildrand der untere und obere
Grenzwert und in Bezug zu diesen der Einstellwert erkennbar ist.


Aufgabe der Erfindung:
----------------------


Derartige Einblendschaltungen werden mit Hilfe von großintegrierten Bauteilen verwirklicht, was gegenüber der Bauweise in diskreter Schaltungstechnik eine wesentliche Kostensenkung zur Folge hatte. Nachteilig hierbei ist die Einbuße an Flexibilität derartiger Schaltungen. Mit diesen
Konzepten ist es nicht möglich, zusätzliche Einblendungen
als mit diesen vorgesehen vorzunehmen.

Der Erfindung liegt deshalb die Aufgabe zugrunde, eine bekannte Schaltung zur Einblendung von Symbolen auf dem Bildschirm eines Fernsehempfängers mit Hilfe von nur wenigen Bauteilen flexibler zu machen, wodurch zusätzliche Einblendungen ermöglicht werden. Dies ist z.B. bei tragbaren Fernsehempfängern wünschenswert, wenn neben der Einblendung der oben beschriebenen Analogfunktionen zusätzlich z.B. noch die Feldstärke des Empfangssignals oder der Ladezustand einer eingebauten Batterie angezeigt werden soll. Hierbei soll eine vorhandene Baugruppe in Form der Einblendschaltung in integrierter Schaltungstechnik mehrfach ausgenutzt werden. Außer der zweiten Anzeige soll erreicht werden, daß mit einfachen Mitteln nicht erwünschte Teile der im oberen Bildteil enthaltenen Informationen bei der zweiten Einblendung unterdrückt werden. Bei engen Abständen der Information in vertikaler Richtung können leicht fehlerhafte Abschneidungen erfolgen.

Eine bekannte Anordnung in integrierter Schaltungstechnik arbeitet in folgender Weise:
Die Schaltung besitzt einen von einem Oszillator mit hoher Frequenz angesteuerten, durch zeilenfrequente Impulse rücksetzbaren Horizontalzähler zur Bestimmung der Fensterbreite und einen von vertikalfrequenten Impulsen rücksetzbaren Vertikalzähler, der zweilenfrequente Impulse zählt und die Fensterhöhe bestimmt, wobei in das durch diese Grenzen festgelegte Fenster z.B. eine Skala mit Analogsignalen, wie z.B. die Abstimmspannung in Form eines Balkens und darunter die Kanalzahlen eingeblendet werden. Zur Bestimmung des geometrischen Einblendortes wird der Zählerstand von Horizontal- und Vertikalzähler über Dekoder zur Bestimmung der Adresse von in einem nicht flüchtigen Speicher (Read Only Memory, ROM) gespeicherten Symbolen verwendet, die z.B. in Form einer Skala und alphanumerischen Zeichen auf dem Bildschirm eines Farbfernsehempfängers wiedergegeben werden sollen. Dabei wird der Speicher mit einer vom Oszillator vorgegebenen systembedingten Taktfrequenz ausgelesen, wobei in Abhängigkeit von aus einem Banddekoder gelieferten Signal, das den eingeschalteten Frequenzbereich berücksichtigt, die Adresse für die eingespeicherten Kanalzahlen geändert wird. Selbstverständlich kann der Vertikalausgangs- und Horizontalausgangspunkt auch mit Monoflops verwirklicht werden, die nachfolgend auf Zähler zur Adressenausgabe geschaltet sind.

Die genannte Aufgabe wird durch die im Patentanspruch 1 angegebenen Merkmale gelöst.

### Beschreibung:

Nachstehend soll an einem Ausführungsbeispiel unter Anwendung der bekannten Einblendanordnung das wesentliche der Erfindung mit Hilfe der Figuren beschrieben werden.

Figur 1 zeigt ein Schirmbild mit bekannter Einblendung;

Figur 2 zeigt ein Schirmbild, wie es durch die beschriebene Schaltungsanordnung erzeugt wird;

Figur 3 zeigt ein Blockschaltbild nach der Erfindung.

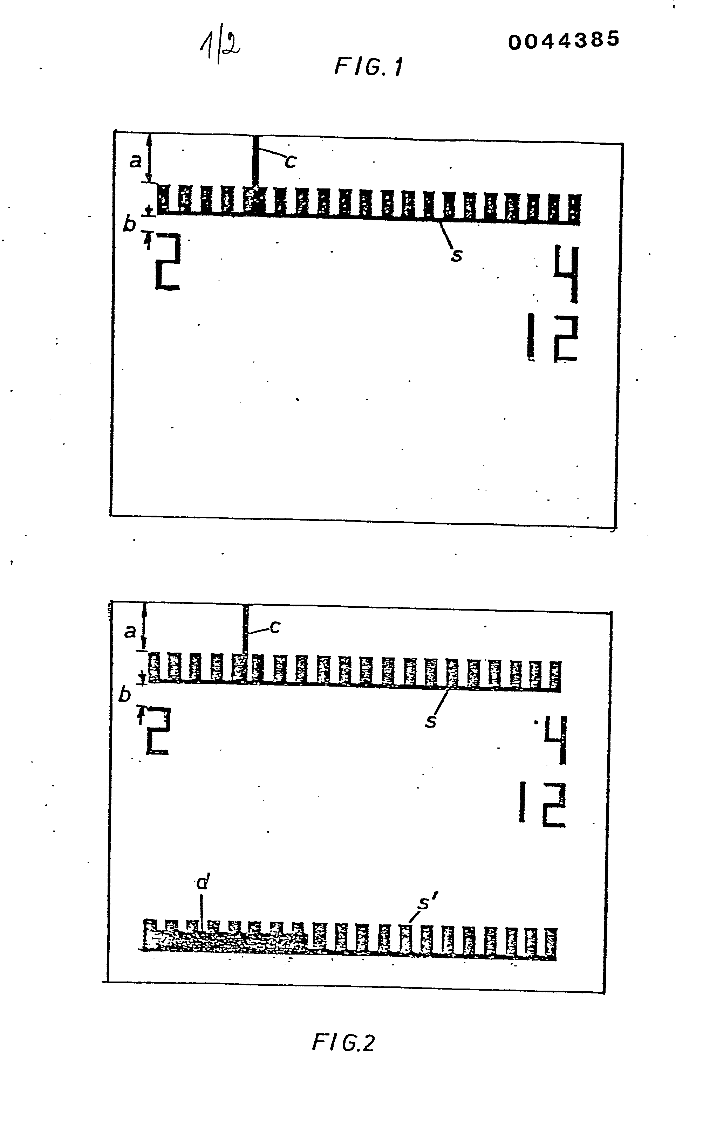

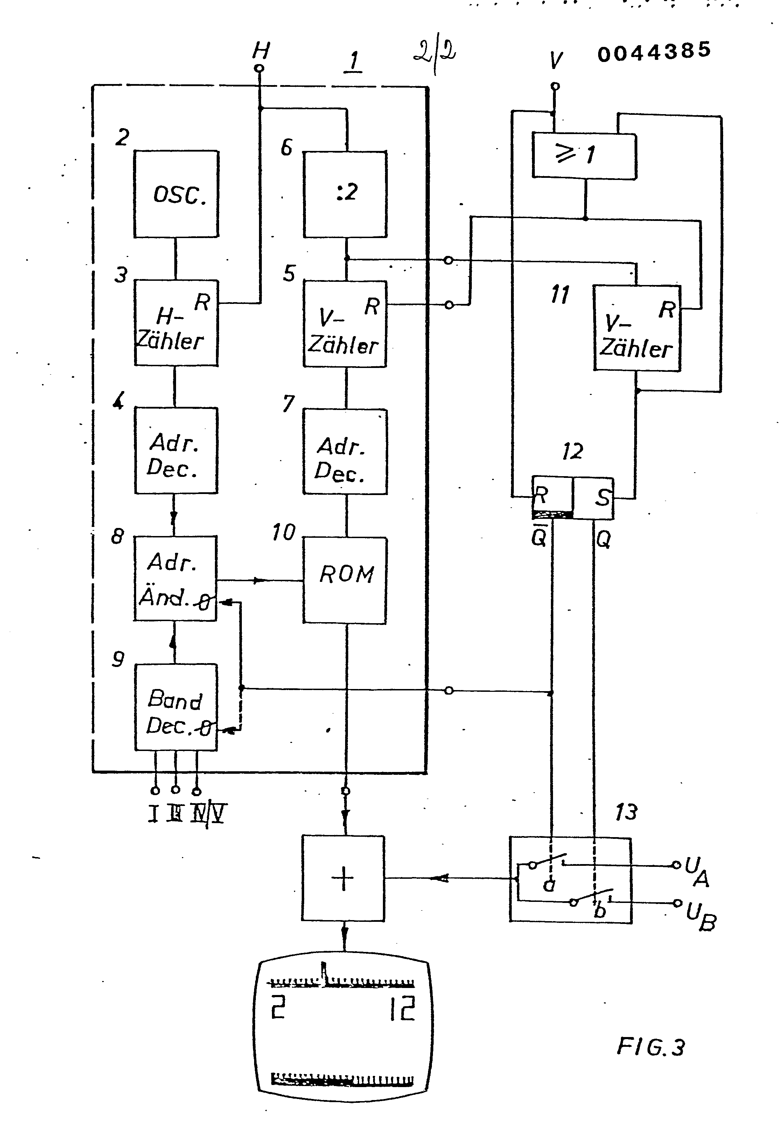

In Figur 1 ist dargestellt, wie mit Hilfe der Einblendung
z.B. der Abstimmspannung eine Information darüber gegeben
wird, auf welchem Sender der Empfänger gerade abgestimmt
ist. Hierzu wird von einer dazu vorgesehenen Schaltung ein
Strichmuster erzeugt, welches z.B. 24 Zeilen im Abstand a
vom oberen Bildrand entfernt für die Dauer von 14 Zeilen
geschrieben wird. Im Abstand b von 6 Zeilen erscheinen Anfangs- und Endnummern des eingestellten Empfangsbereichs
und darunter die Nummer des aufgerufenen Speicherplatzes.
Ein Balken c überstreicht die Skala s entsprechend der eingestellten Abstimmspannung. Gemäß der Aufgabenstellung vorliegender Erfindung soll eine weitere Information auf der
unteren Bildhälfte eingeblendet werden. Hierzu sollen
Teile der Information der oberen Bildhälfte wiederholt werden, wie z.B. die Skala s. Die anderen Informationen sollen aber ausgeblendet werden, wie z.B. die Ziffern. Auf
der unteren Skala s' soll z.B. die empfangene Feldstärke
an dem horizontalen Balken d ablesbar sein, so daß es bei
Verwendung von tragbaren Fernsehempfängern möglich ist, die
Antenne so auszurichten, daß die Länge des horizontalen Balkens d ein Maximum wird. In Figur 2 ist das entsprechende
Schirmbild wiedergegeben, wie es mit der erfindungsgemäßen
Schaltungsanordnung erzeugt werden kann, die nachfolgend
mit Hilfe der Figur 3 erklärt wird.

Hier ist in dem stark umrandeten Teil 1 der Figur 2 der in
Frage kommende Teil einer bekannten integrierten Schaltung
in der oben beschriebenen Wirkungsweise als Blockschaltbild dargestellt. Ein Taktoszillator 2 gibt Impulse an einen
Horizontalzähler 3, der von Zeilensynchronimpulsen H jeweils rückgesetzt wird. Dieser bestimmt über den Horizontaladressdekoder 4 den Ort der Einblendung in Horizontalrichtung. Ein
Vertikalzähler 5 zählt die durch einen Frequenzteiler 6 geteilten Horizontalimpulse und wird durch vertikalfrequente
Synchronimpulse V zurückgesetzt. Der Vertikaladressdekoder 7
legt diesen Ort der Einblendung in vertikaler Richtung fest.
Je nach ausgewählter Adresse über die Adressenänderungsschaltung 8 in Abhängigkeit vom eingestellten Frequenzbereich (Band I, III, IV, V) des Fernsehbandes wird über den
Banddekoder 9 die Adresse für das Auslesen aus dem nicht
flüchtigen Speicher 10 aktiviert. Auf diese Weise werden
z.B. die Skala und die darunter befindlichen Kanalnummern
ausgelesen und auf dem Schirm der Bildröhre des Fernsehempfängers wiedergegeben.

Zur Wiedergabe eines zusätzlichen Analogsignals in Form
eines am unteren Bildschirmrand erscheinenden Balkens sollen
die gleichen Teile der integrierten Schaltung 1 ausgenützt
werden, unter nochmaliger Wiedergabe der Skala, jedoch bei
gleichzeitiger Unterdrückung der darauffolgenden Kanalnummern, da sie nur stören würden. Dies wird durch die
nachfolgend beschriebene zusätzliche Schaltungsmaßnahme
erreicht.

An den Frequenzteiler 6 wird ein zusätzlicher Vertikalzähler
11 angeschlossen, der ebenfalls von den Vertikalsynchronimpulsen V zurückgesetzt wird. Der Ausgang dieses Zählers 11
gibt immer dann einen Impuls ab, wenn der Elektronenstrahl
in der Fernsehbildröhre mindestens das zweite Drittel seiner Vertikalablenkung zurückgelegt hat. Der Zähler wird in
diesem Fall, bedingt durch die vorhergehende Frequenzteilung der Horizontalimpulse, so dimensioniert, daß er mindestens einen Zählerstand von 100 erreicht. Der entstehende Impuls wird auf den Setzeingang 5 einer bistabilen Kippstufe 12 gegeben. Der Ausgang Q dieser Kippstufe 12 schaltet dabei die einzublendende zusätzliche analoge Spannung UB über die Schaltstufe 13 Kontakt b durch. Gleichzeitig werden die Zähler 5 und 11 wieder zurückgesetzt. Der Ausgang $\overline{Q}$ der bistabilen Kippstufe 12 beeinflusst die Adressänderungsschaltung 8 in der Weise, daß nach Auslesen der Skala aus dem Speicher 10 auf eine nicht belegte Adresse umgeschaltet wird, so daß eine zusätzliche Information unterhalb dieser Skala unterbleibt.

Nach dem Rücksetzen der bistabilen Kippstufe 12 wird wieder die Analogspannung UA über die Schaltstufe 13 mit Kontakt a durchgeschaltet. Gleichzeitig wird die Adressenänderungsschaltung 8 wieder aktiv, so daß unterhalb der im oberen auf dem Fernsehbildschirm erscheinenden Skala die zusätzliche Information in Form von Kanalzahlen wiedergegeben wird.

Wie mit der gestrichelten Linie angedeutet, kann auch der Banddekoder 9 über die bistabile Kippstufe 12 dahingehend beeinflusst werden, daß dieser während der Zeitdauer der zweiten Einblendung gesperrt wird.

Die soeben beschriebene Schaltung zur Lösung vorliegender Aufgabe ist als Ergänzung der bekannten integrierten Schaltung dazu geeignet, nicht wie zeichnerisch wegen der Abgrenzung zum Bekannten dargestellt, als äußere Beschaltung sondern als Teil eben dieser integrierten Schaltung ausgebildet zu werden.

Patentansprüche:
-----------------

1. Schaltung zum Einblenden eines Analogsignals, einer Bezugsstruktur für das Analogsignal und alphanumerischen Zeichen auf dem Bildschirm eines Fernsehempfängers mit Hilfe einer Einblendschaltung bestehend aus einem Taktgenerator, je einem Zähler mit jeweils zugeordnetem Dekoder zur Bestimmung des Einblendortes in horizontaler und vertikaler Richtung, wobei die Dekoder Adressen eines Speichers (ROM) ansteuern, in welchem die verschiedenen einzublendenden alphanumerischen Zeichen und die Bezugsstruktur eingespeichert sind, und wobei die anzusteuernde Adresse für die alphanumerischen Zeichen in Abhängigkeit von dem momentan eingestellten Frequenzband (I,III,IV,V) über einen Banddekoder in einer Adressenänderungsschaltung veränderbar ist, dadurch gekennzeichnet, daß ein zusätzlicher Vertikalzähler (11) vorgesehen ist, der nach einer voreinstellbaren Anzahl von Eingangsimpulsen eine von der Vertikalsynchronimpulsen rücksetzbare bistabile Kippstufe (12) setzt, wobei gleichzeitig der erste Vertikalzähler (5) zurückgesetzt wird und wobei im gesetzten Zustand der Kippstufe (12) deren einer Ausgang (Q) den Schalter (13b) für ein zweites einzublendendes Analogsignal ($U_B$) an telle des ersten Analogsignals ($U_A$) einschaltet und deren anderer Ausgang ($\overline{Q}$)
gleichzeitig die aus dem Speicher (ROM) kommende alphanumerische Information, nicht aber die daraus kommende
Bezugsstruktur (s'), sperrt.

2. Schaltung nach Anspruch 1, dadurch gekennzeichnet, daß
der zweite Ausgang ($\overline{Q}$) der bistabilen Kippstufe (12)
während deren gesetzten Zustandes die Adressenänderungsschaltung (8) nach Auslesen der Bezugsstruktur auf eine
nicht belegte Adresse des Speichers (ROM) umschaltet.

3. Schaltung nach Anspruch 1, dadurch gekennzeichnet, daß
der zweite Ausgang ($\overline{Q}$) der bistabilen Kippstufe (12)
während deren gesetzten Zustands die Adressenänderungsschaltung (8) beeinflussenden Banddekoder (9) sperrt.

4. Schaltung nach Anspruch 1, dadurch gekennzeichnet, daß
der zweite Vertikalzähler (11) sowohl von den Vertikalsynchronimpulsen rücksetzbar ist als auch von seinem
Ausgang, sobald der voreingestellte Zählerstand erreicht ist.

5. Schaltung nach Anspruch 1, dadurch gekennzeichnet, daß
der zweite Vertikalzähler (11) derart dimensioniert ist,
daß er seinen maximalen Zählerstand zur Abgabe eines
Impulses in der zweiten Hälfte der Vertikalablenkung
des Elektronenstrahls erreicht.

*FIG.1*

*FIG.2*

FIG.3

Europäisches
Patentamt

EUROPÄISCHER RECHERCHENBERICHT

**0044385**
Nummer der Anmeldung

EP 81103825.6

| | EINSCHLÄGIGE DOKUMENTE | | KLASSIFIKATION DER ANMELDUNG (int. C.) |
|---|---|---|---|
| Kategorie | Kennzeichnung des Dokuments mit Angabe soweit erforderlich, der maßgeblichen Teile | betrifft Anspruch | |
| A | FUNKSCHAU, Band 50, 1978, Heft 3 München<br><br>ING.PETER FLAMM, DIPL.-ING.KLAUS STROBL "Zeichenanzeige auf dem Bildschirm mit IS SAA 1008" Seiten 94-97<br><br>   * Seite 94, Bild 2, linke Spalte, 3.Absatz - Seite 95, linke Spalte, letzter Absatz *<br><br>-- | 1 | H 04 N 5/44<br>H 04 N 5/50 |
| | DE - A - 2 218 703 (DEUTSCHE POST)<br><br>   * Fig.1,2; Seite 2, Absätze 2,4; Seite 4, vorletzter Absatz - Seite 5 *<br><br>-- | 1 | |
| A | DE - B - 2 258 864 (PHILIPS)<br><br>   * Fig.1; Spalte 1, Zeile 63- Spalte 2, Zeilen 4, 57-66; Spalte 4, Zeilen 28-38, 47-52 *<br><br>-- | 1 | |
| A | DE - B - 1 949 899 (SIEMENS)<br><br>   * Fig.2; Spalte 4, Zeilen 44-54 *<br><br>---- | 1 | |

**RECHERCHIERTE SACHGEBIETE (Int. Cl.)**

H 04 N 5/00
H 04 N 7/00
H 04 N 9/00
G 01 R 19/00
G 06 F 3/00
G 09 G 1/00

**KATEGORIE DER GENANNTEN DOKUMENTE**

X von besonderer Bedeutung
A technologischer Hintergrund
O nichtschriftliche Offenbarung
P Zwischenliteratur
T der Erfindung zugrunde liegende Theorien oder Grundsätze

E kollidierende Anmeldung
D in der Anmeldung angeführtes Dokument
L aus andern Gründen angeführtes Dokument

& Mitglied der gleichen Patentfamilie, übereinstimmendes Dokument

X Der vorliegende Recherchenbericht wurde für alle Patentansprüche erstellt

| Recherchenort | Abschlußdatum der Recherche | Prüfer |
|---|---|---|
| WIEN | 28-10-1981 | BENISCHKA |